# EUROPEAN PATENT SPECIFICATION

(11) **EP 3 267 145 B1**
(45) Date of publication and mention of the grant of the patent: **17.07.2019**
(21) Application number: 16192490.7
(22) Date of filing: 05.10.2016
(51) Int. Cl.: G01B 9/02

(54) **MEASURING DEVICE FOR ACCURATELY DETERMINING THE DISPLACEMENT OF A ROTATING TEST OBJECT PROVIDED WITH A LIGHT REFLECTIVE SURFACE**
MESSVORRICHTUNG ZUR GENAUEN BESTIMMUNG DER VERLAGERUNG EINES SICH DREHENDEN TESTOBJEKTS MIT LICHTREFLEKTIERENDER OBERFLÄCHE
DISPOSITIF DE MESURE PERMETTANT DE DÉTERMINER AVEC PRÉCISION LE DÉPLACEMENT D'UN OBJET TEST ROTATIF POURVU D'UNE SURFACE RÉFLÉCHISSANT LA LUMIÈRE

(43) Date of publication of application: 10.01.2018
(73) Proprietor: MI-Partners BV, 5652 AM Eindhoven (NL)
(72) Inventor: SCHNEIDER, Ronald Maarten, 5655 JX Eindhoven (NL); RUIJL, Theo Anjes Maria, 5688 CZ Oirschot (NL); BOGERS, Maurice Cornelius Leonardus, 5652 HD Eindhoven (NL)
(74) Representative: Verhees, Godefridus Josephus Maria

(56) References cited:
- EP-A1- 1 647 798
- US-A1- 2003 048 456

## Description

### Technical filed of the invention

The invention relates to a measuring device for determining the displacement of a rotating test object provided with a light reflective surface with an accuracy of nanometers and nanoradials, which object prior to or during the displacement may tilt over a relatively large angle, which measuring device comprises an optical system, as well as a light source which sends a light beam into the optical system, and a sensor which measures and outputs parameters of the light beam leaving the optical system, which optical system is such that it forwards at least a part of the incoming light beam to the light reflecting surface of the object and forwards the light beam reflected from the object to the sensor, said optical system comprises a beam splitter provided with a light splitting surface having a front side directed towards the light source and a rear side facing away of the light source, of which beam splitter the light splitting surface is at 45° with respect to the light beam emitted by the light source, as well as a reflector of which the light reflecting surface is parallel to the light beam transmitted by the light source and is located on the front side of the light splitting surface and is under 45° with respect to light splitting surface of the beam splitter, and a corner cube which is present opposite the reflector at the other side of the beam splitter, wherein the light reflecting surface of the object to be measured is located at the rear of the light splitting surface of the beam splitter and in line with the light beam emitted by the light source, which measuring device further comprises a further optical system which comprises one or more of the following elements: further reflectors, retro-reflectors and lenses. With such a measuring device, the distance to an object can be accurately measured by utilizing interference of a portion of a light beam deflected in the measuring device towards a sensor and a coinciding light beam reflected from the object to be measured.

### Background of the invention

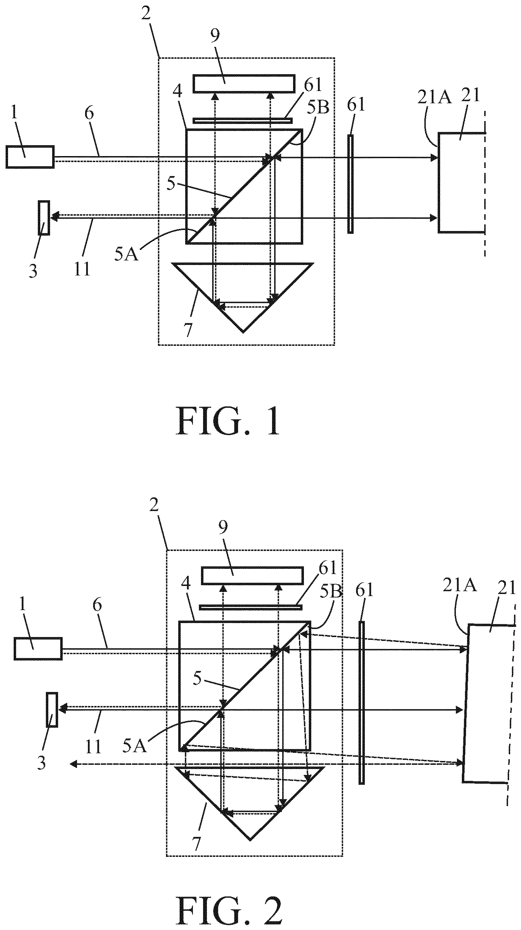

Such a measuring device is generally known in the form of a Michelson interferometer wherein a light beam is split into two beams which follow a different path before coming together and interfering. A light source, usually a laser, emits a parallel light beam. This light beam hits a beam splitter, which splits the light beam in one sub light beam going straight forward and one sub light beam deflecting at 90°. The through-going sub light beam is reflected by a reflector on the object to be measured. The other sub light beam is reflected from another reflector. The reflected sub light beams recombine via the beam splitter and reach a sensor. In this way, tiny differences in the path lengths can be measured. Figure 1 shows an embodiment of this known measuring device. With this well known Michelson interferometer very small displacements of an object provided with a light reflecting surface can be measured provided that the sub light beam is perpendicular to the light reflecting surface. If the object of which the displacement has to be measured very precisely, tilts over a relatively large angle such that the sub light beam is no longer perpendicular to the light reflecting surface, this known measuring device cannot be used. The sub light beam is then reflected at an angle to the light reflecting surface and directed at a different angle into the optical system. The reflected sub light beam follows a different path and does not coincide with the other sub light beam which does not go through the light reflecting surface of the object to be measured, and therefore no interference can occur. This has been clarified in Figure 2.

A device according to the preamble of claim 1 is known from US20030048456A.

### Summary of the invention

It is an object of the present invention to provide a measuring device of the type described in the preamble with which displacements can be measured with high accuracy, even if the object to be measured makes a tilt over a relatively large angle. To this end the measuring device according to the invention is characterized in that it further comprises a further optical system which comprises one or more of the following elements: further reflectors, retro-reflectors and lenses, said further optical system is such that it returns an incoming sub light beam reflected from the light reflecting surface of the object to be measured in opposite direction and at the same place as it entered into the further optical system. The further optical system is adjacent to the optical system and returns an incoming light beam in itself no matter at which angle and at which place this light beam enters the further optical system. The basic idea is to return the light beam reflected on the object to be measured into itself (this is already done in known measuring devices) even when the object to be measured is tilted with respect to the light beam. In the latter situation, in the known measuring device, the sub light beam falling on the object to be measured is no longer reflected in itself, and therefore ultimately does not coincide with the sub light beam deflected in the beam splitter so that no interference occurs and the measurement cannot be performed. Under a light beam any electromagnetic radiation should be understood, thus not only visible and invisible light, but also other electromagnetic waves.

An embodiment of the measuring device according to the invention is characterized in that the further optical system comprises a retro-reflector and a further reflector, wherein the retro-reflector is arranged in such a way that the sub light beam reflected from the object to be measured enters the retro-reflector which reflects this sub light beam back to the object to be measured which in turn reflects the sub light beam and directs it perpendicular to the further reflector so that the sub light beam is returned in the same path. Under a retro-reflector an optical system is to be understood that returns a light beam in the same direction as it enters, independent of the angle of incidence.

A favorable embodiment of the measuring device according to the invention is characterized in that the retro-reflector comprises a movable focusing lens, which is present on the rear side of the beam splitter in the sub light beam going straight through the beam splitter, as well as a displacement device for keeping the light reflecting surface of the object to be measured in focus, wherein the further reflector is present between the beam splitter and the focusing lens and is perpendicular to the light beam emitted by the light source.

Another favorable embodiment of the measuring device according to the invention is characterized in that the retro-reflector comprises a corner cube, which is present in the path of the sub light beam reflected from of the reflecting surface of the object to be measured, wherein the further reflector is at right angles to the sub light beam emerging from the retro-reflector and reflected by the reflecting surface of the object to be measured, and wherein the optical system comprises an auxiliary reflector which is present at the rear of the beam splitter at right angles to the light beam emerging from the light source and is next to this light beam.

Yet another favorable embodiment of the measuring device according to the invention is characterized in that the retro-reflector comprises a collimator lens which is present in the path of the sub light beam reflected from the reflecting surface of the object to be measured, as well as an auxiliary reflector which is present in the focal plane of the collimator lens, wherein the further reflector is parallel to and next to the collimator lens, and wherein the optical system comprises a further auxiliary reflector, which is present at the rear of the beam splitter at right angles to the light beam emerging from the light source and is next to this light beam.

### Brief description of the drawings

Below, the invention will be further elucidated with reference to embodiments of the measuring device according to the invention shown in the drawings. In these drawings:
Figure 1 is a schematic representation of the known measuring device with the object to be measured in a first position;
Figure 2 shows the known measuring device with the object to be measured in a second position tilted with respect to the first position shown in Figure 1;
Figure 3 is a schematic representation of a first embodiment of the measuring device according to the invention with the object to be measured in a first position;
Figure 4 shows the measuring device shown in Figure 3, with the object to be measured in a second position tilted with respect to the first position shown in Figure 3;
Figure 5 is a schematic representation of a second embodiment of the measuring device according to the invention with the object to be measured in a first position and in a second position tilted with respect to the first position; and
Figure 6 is a schematic representation of a third embodiment of the measuring device according to the invention with the object to be measured in a first position and in a second position tilted with respect to the first position.

### Detailed description of the drawings

In Figure 1, an embodiment of the known measuring device is shown. This known measuring device is a Michelson interferometer with an additional corner cube which allows the sensor to be situated next to the light source. This known measuring device has an optical system 2, as well as a light source 1 which directs a light beam in the optical system, and a sensor 3 that measures the light beam emerging from the optical system. The optical system has a beam splitter 4 provided with a light splitting surface 5 having a front side 5A facing the light source and a rear side 5B facing away from the light source. The light splitting surface is at an angle of 45° with respect to the light beam emitted by the light source 6. The optical system 2 further includes a reflector 9 of which the light reflecting surface is parallel to the light beam emitted by the light source. This reflector is located at the front side 5A of the light splitting surface and is furthermore at an angle of 45° with respect to light splitting surface 5 of the beam splitter. An object 21 to be measured has a light reflecting surface 21A and is at the rear of the light splitting surface of the beam splitter and in line with the light beam emitted by the light source. Furthermore, the optical system 2 has a corner cube 7 which is present straight opposite the reflector 9 at the other side of the beam splitter, and which returns coinciding sub light beams coming from the beam splitter back to the beam splitter at a different location.

The optical system of the known measuring device is such that the light beam emitted by the light source and entering in the optical system is split into two sub light beams, which each follow a different path in the optical system, where the outgoing sub light beams coincide and are collected by a sensor. The paths along which the sub light beams are moving have a different length and one of the paths goes through the light reflecting surface of the object to be measured, and the other path does not. Due to the difference in length of the paths and by coinciding the sub light beams upon exit, interference occurs. As a result, the displacement of the object to be measured can be determined from the outgoing light beam.

With this well known Michelson interferometer very small displacements of an object provided with a light reflecting surface can be measured, provided that the sub light beam is perpendicular to the light reflecting surface. If the object of which the displacement has to be measured very precisely tilts over a relatively large angle such that the sub light beam is no longer perpendicular to the light reflecting surface, this known measuring device cannot be used. This has been clarified in Figure 2. The sub light beam is then reflected at an angle to the light reflecting surface and returned at a different angle into the optical system. Because of this the reflected sub light beam follows a different path and does not coincide with the other exiting sub light beam which follows a path that does not go through the light reflecting surface of the object to be measured, and therefore no interference can occur.

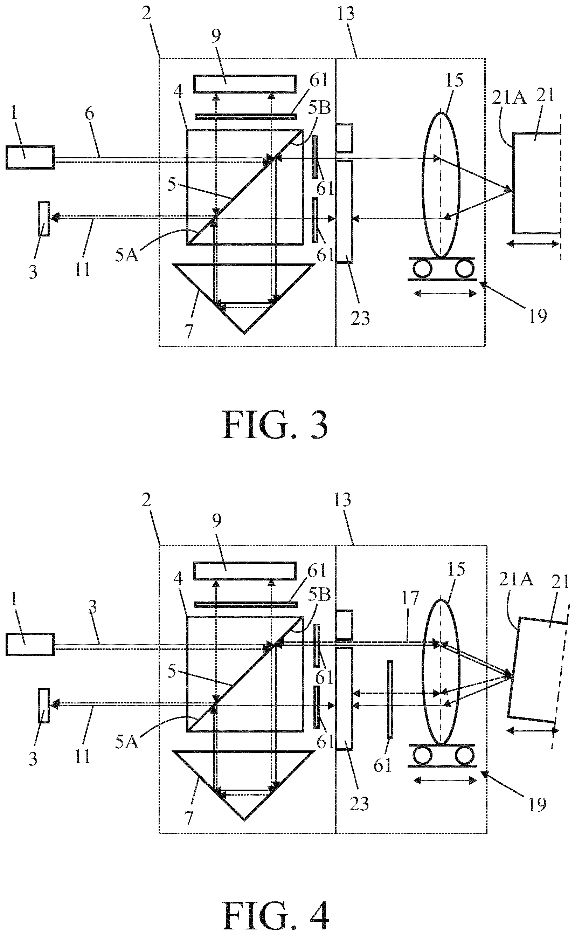

In the figures 3 to 6 three different embodiments of the measuring device according to the invention are illustrated schematically. All parts that are equal to that of the known measuring device are designated by the same reference numerals. In each of these embodiments, the measuring device has a light source 1 which emits a parallel light beam 6, as well as an optical system 2 and a sensor 3 for measuring the outgoing light beam 11.

The optical system 2 has in each of the embodiments:
- a beam splitter 4 present in the light beam emitted by the light source and having a light splitting surface 5 at an angle of 45° with respect to this light beam, which surface is provided with a front side 5A facing the light source and a rear side 5B facing away from the light source,
- a corner cube 7 being perpendicular to the light beam 6 and being at the rear side 5B of the light splitting surface 5,
- a reflector 9 being perpendicular to the light beam 6 and being at the front side 5A of the light splitting surface 5, and
- a further optical system 13.

In the first embodiment shown in Figure 3, the further optical system 13 is composed of:
- a movable focusing lens 15, which is present at the rear side of the light splitting surface 5 of the beam splitter 4 and being in the light beam 17 going straight through the beam splitter 5, as well as
- a displacement device 19 for keeping the light reflecting surface 21A of the object to be measured 21 in focus, and
- a further reflector 23, which is present between the beam splitter 5 and the focusing lens 15 and which is perpendicular to the light beam 3 emitted by the light source 1.

The displacement device 19 may be an active device, wherein the output signal of the measurement system to determine the displacement of the object to be measured with nm accuracy, is also used to adjust the focusing lens. Instead of making use of the output signal of the measuring system another measurement system may be used for determining the distance to the object to be measured, for example, a capacitive or inductive system that measures through the optical surface of the object to be measured. For controlling the focusing lens, this determination of distance may be less accurate (on the micrometer scale instead of on a nanometer scale). The displacement device may also be a passive device, for example a mechanical system which contacts the object to be measured, or through an air bearing which passes over the optical surface of the object to be measured and pulls the lens.

In Figure 4, the path is shown which the light beam follows through the two optical systems of the measuring device in case the object to be measured is tilted.

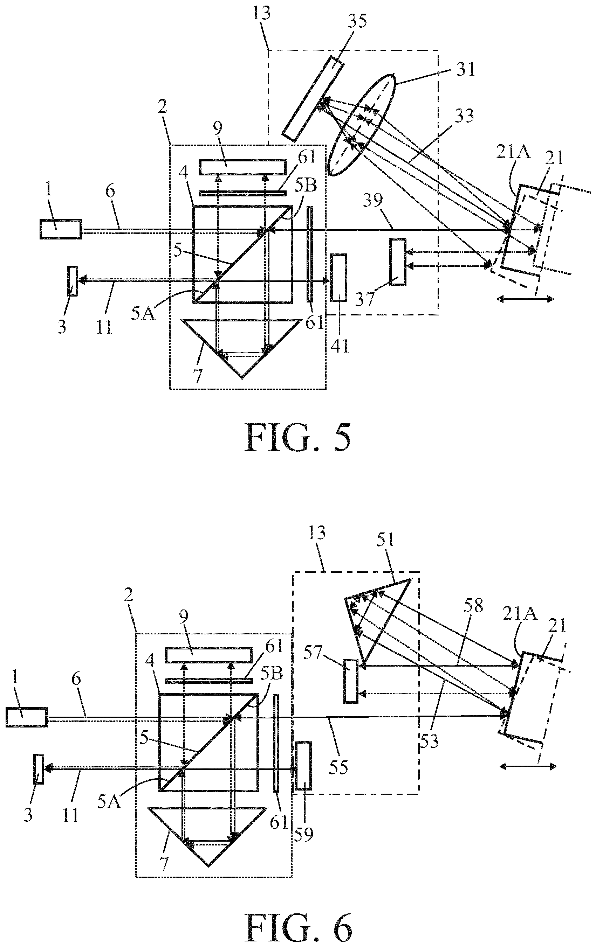

In the second embodiment shown in Figure 5, the further optical system 13 is composed of:
- a collimator lens 31 which is present in the light beam 33 reflected from the light reflecting surface 21A of the object 21 to be measured,
- an auxiliary reflector 35 present in the focal plane of the collimating lens 31,
- a further reflector 37, which is present in the light beam 39 reflected from the reflecting surface 21A of the object 21 to be measured 39, and
- a further auxiliary reflector 41 which is present at the rear side 5B of the light splitting surface 5 of the beam splitter 4, and is oriented at right angles to the light beam 6 emerging from the light source 1, and is arranged next to to this light beam.

The further reflector 37 and auxiliary reflector 41 may also form a whole.

In the third embodiment shown in Figure 6, the further optical system 13 is composed of:
- a corner cube 51 which is present in the light beam 53 reflected by the reflecting surface 21A of the object 21 to be measured, wherein, during operation, the reflecting surface 55 is at an angle with respect to light beam 55 which passes the beam splitter in a straight line,
- a further reflector 57 which is at right angles to the light beam 58 emerging from the retro-reflector 51 and reflected by the reflecting surface 21A of the object 21 to be measured, and
- a further auxiliary reflector 59 which is present at the rear side 5B of the light splitting surface 5 of the beam splitter 4, and is oriented at right angles to the light beam 6 emerging from the light source 1, and is arranged next to this light beam.

Again, the further reflector 57 and further auxiliary reflector 59 can be integral.

The measuring devices shown in the figures further have one or more quarter-wavelength plates 61. By passing twice a quarter-wave plate the polarization direction of linearly polarized light changes into a different direction. These quarter-wavelength plates may be necessary to ensure that a beam of light first goes straight through a light splitting surface and after passing two times the quarter-wavelength plate is reflected by the light splitting surface.

Although in the above the invention is elucidated with reference to the drawings, it should be noted that the invention is in no way limited to the embodiments shown in the drawings, but is solely defined by the appendend claims.

## Claims

1. A measuring device for determining the displacement of a rotating object (21) provided with a light reflective surface (21A) with an accuracy of nanometers and nanoradials, which object prior to or during the displacement may tilt over a relatively large angle, which measuring device comprises an optical system (2), as well as a light source (1) which sends a light beam (6) into the optical system, and a sensor (3) which measures and outputs parameters of the light beam (11) leaving the optical system, which optical system comprises a beam splitter (4) provided with a light splitting surface (5) having a front side (5A) directed towards the light source and a rear side (5B) facing away of the light source, of which beam splitter the light splitting surface is at 45° with respect to the light beam emitted by the light source, as well as a reflector (9) of which the light reflecting surface is parallel to the light beam transmitted by the light source and is located on the front side (5A) of the light splitting surface and is under 45° with respect to light splitting surface (5) of the beam splitter, and a corner cube (7) which is present opposite the reflector (9) at the other side of the beam splitter, wherein the light reflecting surface (21A) of the rotating object (21) to be measured is located at the rear (5B) of the light splitting surface (5) of the beam splitter and in line with the light beam emitted by the light source (6), which optical system is such that it forwards at least a part of the incoming light beam to the light reflecting surface of the object and forwards the light beam reflected from the object to the sensor, which measuring device further comprises a further optical system (13) which comprises one or more of the following elements: further reflectors (23; 37; 57), retro-reflectors (15, 19; 31, 35; 51) and lenses (15; 31), **characterized in that** the further optical system (13) is between the optical system (2) and the light reflecting surface (21A) of the rotating object (21) to be measured, said further optical system is such that it returns an incoming sub light beam reflected from the light reflecting surface of the object to be measured in opposite direction and at the same place as it entered into the further optical system.

2. A measuring device according to claim 1, **characterized in that** the further optical system comprises a retro-reflector (15, 19; 31, 35; 51) and a further reflector (23; 37; 57), wherein the retro-reflector is arranged in such a way that the sub light beam reflected from the object (21) to be measured enters the retro-reflector which reflects this sub light beam back to the object to be measured which in turn reflects the sub light beam and directs it perpendicular to the further reflector so that the sub light beam is returned in the same path.

3. A measuring device according to claim 2, **characterized in that** the retro-reflector comprises a movable focusing lens (15), which is present on the rear side of the beam splitter (4) in the sub light beam going straight through the beam splitter, as well as a displacement device (19) for keeping the light reflecting surface (21A) of the object (21) to be measured in focus, wherein the further reflector (23) is present between the beam splitter and the focusing lens and is perpendicular to the light beam emitted by the light source (6).

4. A measuring device according to claim 2, **characterized in that** the retro-reflector comprises a corner cube (51), which is present in the path of the sub light beam (53) reflected from of the reflecting surface (21A) of the object (21) to be measured, wherein the further reflector (57) is at right angles to the sub light beam (58) emerging from the retro-reflector and reflected by the reflecting surface of the object to be measured, and wherein the optical system (2) comprises an auxiliary reflector (59) which is present at the rear of the beam splitter (4) at right angles to the light beam (6) emerging from the light source (1) and is next to this light beam.

5. A measuring device according to claim 2, **characterized in that** the retro-reflector comprises a collimator lens (31) which is present in the path of the sub light beam (33) reflected from the reflecting surface (21A) of the object (21) to be measured, as well as an auxiliary reflector (35) which is present in the focal plane of the collimator lens, wherein the further reflector (37) is parallel to and next to the collimator lens, and wherein the optical system (2) comprises a further auxiliary reflector (41), which is present at the rear of the beam splitter (4) at right angles to the light beam (6) emerging from the light source (1) and is next to this light beam.

## Patentansprüche

1. Messvorrichtung für die auf den Nanometer und den Nanoradianten genaue Bestimmung der Verlagerung eines rotierenden, mit einer lichtreflektierenden Oberfläche (21A) versehenen Messobjekts (21), das sich vor oder während der Verlagerung über einen verhältnismäßig großen Schwenkwinkel schrägstellen lässt, wobei die Messvorrichtung zur Messung der Verlagerung des Messobjekts erstens ein optisches System (2) und zweitens eine Lichtquelle (1), mit der ein Lichtstrahl (6) in das optische System gelenkt wird, sowie drittens einen Aufnehmer (3) umfasst, mit dem Parameter des aus dem optischen System austretenden Lichtstrahls (11) gemessen und ausgegeben werden, wobei das besagte optische System erstens einen Strahlenteiler (4) umfasst, der mit einer lichtteilenden Oberfläche (5) versehen ist, die mit ihrer Vorderseite (5A) auf die Lichtquelle gerichtet und mit ihrer Rückseite (5B) von der Lichtquelle abgewandt ist, wobei die lichtteilende Oberfläche des Strahlenteilers in einem Winkel von 45 Grad zu dem von der Lichtquelle ausgesandten Lichtstrahl angeordnet ist, und das optische System zweitens einen Reflektor (9) umfasst, dessen lichtreflektierende Oberfläche parallel zu dem von der Lichtquelle ausgesandten Lichtstrahl angeordnet ist, sich an der Vorderseite (5A) der lichtteilenden Oberfläche befindet und in einem Winkel von 45 Grad zu der lichtteilenden Oberfläche (5) des Strahlenteilers angeordnet ist, wobei die lichtreflektierende Oberfläche (21A) des Messobjekts (21) auf einer Linie mit dem von der Lichtquelle ausgesandten Lichtstrahl (6) an der Rückseite (5B) der lichtteilenden Oberfläche (5) des Strahlenteilers angeordnet ist und wobei das besagte optische System so ausgeführt ist, dass der einfallende Lichtstrahl zumindest teilweise zu der lichtreflektierenden Oberfläche des Messobjekts weitergeleitet wird und der von dem Messobjekt reflektierte Lichtstrahl zu dem Aufnehmer weiterläuft, **dadurch gekennzeichnet, dass** das weitere optische System (13) zwischen dem optischen System (2) und der lichtreflektierenden Oberfläche (21A) des rotierenden Messobjekts (21) angeordnet ist und die besagte Messvorrichtung ferner ein weiteres optisches System (13) umfasst, das ein oder mehrere der folgenden Elemente enthält: weitere Reflektoren (23; 37; 57), Rückstrahler (15, 19; 31, 35; 51) und Linsen (15; 31), wobei das besagte weitere optische System so ausgeführt ist, dass ein von der lichtreflektierenden Oberfläche des Messobjekts zurückgeworfener und in das weitere optische System einfallender Teilstrahl in entgegengesetzter Richtung und zu der gleichen Stelle zurückläuft, an der er in das System gelenkt wurde.

2. Messvorrichtung nach Anspruch 1, **dadurch gekennzeichnet, dass** das weitere optische System einen Rückstrahler (15, 19; 31, 35; 51) und einen weiteren Reflektor (23; 37; 57) umfasst, wobei der Rückstrahler so aufgestellt ist, dass der von dem Messobjekt (21) reflektierte Teilstrahl in den Rückstrahler einfällt, der diesen Teilstrahl zu dem Messobjekt zurückwirft, das den Teilstrahl seinerseits reflektiert und senkrecht auf den weiteren Reflektor fallen lässt, wodurch der Teilstrahl auf gleichem Wege zurückgeleitet wird.

3. Messvorrichtung nach Anspruch 2, **dadurch gekennzeichnet, dass** der Rückstrahler erstens eine bewegliche Fokussierlinse (15) umfasst, die an der Rückseite des Strahlenteilers (4) in dem durch den Strahlenteiler gerade hindurchführenden Teilstrahl angeordnet ist, und zweitens eine Positioniervorrichtung (19) für die Fokussierung auf die lichtreflektierende Oberfläche (21A) des zu erfassenden Messobjekts (21) umfasst, wobei der weitere Reflektor (23) zwischen dem Strahlenteiler und der Fokussierlinse angeordnet ist und sich im rechten Winkel zu dem von der Lichtquelle ausgesandten Lichtbündel (6) befindet.

4. Messvorrichtung nach Anspruch 2, **dadurch gekennzeichnet, dass** der Rückstrahler einen Tripelspiegel (51) umfasst, der in dem Gang des von der reflektierenden Oberfläche (21A) des Messobjekts (21) zurückgeworfenen Teilstrahls (53) angeordnet ist, wobei der weitere Reflektor (57) im rechten Winkel zu dem aus dem Rückstrahler austretenden und von der reflektierenden Oberfläche (21A) des Messobjekts zurückgeworfenen Teilstrahls (58) angeordnet ist und wobei das optische System (2) einen Hilfsreflektor (59) umfasst, der an der Rückseite des Strahlenteilers (4) im rechten Winkel zu dem aus der Lichtquelle (1) austretenden Lichtstrahl (6) und neben diesem Lichtstrahl angeordnet ist.

5. Messvorrichtung nach Anspruch 2, **dadurch gekennzeichnet, dass** der Rückstrahler erstens ein Kollimatorobjektiv (31) umfasst, das in dem Gang des von der reflektierenden Oberfläche (21A) des zu erfassenden Messobjekts zurückgeworfenen Teilstrahls (33) angeordnet ist, und zweitens einen Hilfsreflektor (35) umfasst, der in der Brennebene des Kollimatorobjektivs angeordnet ist, wobei der weitere Reflektor (37) parallel zu und neben dem Kollimatorobjektiv angeordnet ist, und wobei das optische System (2) einen weiteren Hilfsreflektor (41) umfasst, der an der Rückseite des Strahlenteilers (4) im rechten Winkel zu dem aus der Lichtquelle (1) austretenden Lichtstrahl (6) und neben diesem Lichtstrahl angeordnet ist.

## Revendications

1. Dispositif de mesure pour déterminer avec une précision nanoradiale le déplacement sur le nanomètre d'un objet de mesure rotatif (21) pourvu d'une surface réfléchissant la lumière (21A), lequel objet de mesure peut, avant ou pendant le déplacement, basculer sur un angle d'inclinaison relativement grand, lequel dispositif de mesure comprend un système optique (2) pour mesurer le déplacement de l'objet de mesure, ainsi qu'une source de lumière (1) qui envoie un rayon de lumière (6) dans le système optique et un capteur (3) qui mesure et transmet les paramètres du rayon de lumière (11) sortant du système optique, lequel système optique comprend un séparateur de faisceaux (4) pourvu d'une surface séparant la lumière (5) ayant une face avant (5A) orientée vers la source de lumière et une face arrière (5B) tournant le dos à la source de lumière, la surface séparant la lumière duquel séparateur de faisceaux faisant un angle de 45° par rapport au rayon de lumière émis par la source de lumière, ainsi qu'un réflecteur (9) dont la surface réfléchissant la lumière est parallèle au rayon de lumière émis par la source de lumière et se trouve sur la face avant (5A) de la surface séparant la lumière et fait un angle de 45° par rapport à la surface séparant la lumière (5) du séparateur de faisceaux, où la surface réfléchissant la lumière (21A) de l'objet de mesure (21) est alignée avec le rayon de lumière émis par la source de lumière (6) sur la face arrière (5B) de la surface séparant la lumière (5) du séparateur de faisceaux, lequel système optique est tel qu'il transmet, vers la surface réfléchissant la lumière de l'objet de mesure, au moins une partie du rayon de lumière apparaissant, et retransmet vers le capteur le rayon de lumière réfléchi par l'objet de mesure, **caractérisé en ce que** le système optique supplémentaire (13) se trouve entre le système optique (2) et la surface réfléchissant la lumière (21A) de l'objet de mesure rotatif (21), lequel dispositif de mesure comprend de plus un système optique supplémentaire (13) comprenant un ou plusieurs des éléments suivants : des réflecteurs supplémentaires (23 ; 37 ; 57), des rétroréflecteurs (15, 19 ; 31, 35 ; 51) et des lentilles (15 ; 31), lequel système optique supplémentaire est tel qu'un sous-faisceau étant réfléchi sur la surface réfléchissant la lumière de l'objet de mesure et pénétrant dans le système optique supplémentaire, est renvoyé en sens inverse et au même endroit que celui par où il est entré.

2. Dispositif de mesure selon la revendication 1, **caractérisé en ce que** le système optique supplémentaire comprend un rétroréflecteur (15, 19 ; 31, 35 ; 51) et un réflecteur supplémentaire (23 ; 37 ; 57), où le rétroréflecteur est élaboré de telle façon que le sous-faisceau réfléchi par l'objet de mesure (21) entre dans le rétroréflecteur qui renvoie ce sous-faisceau vers l'objet de mesure qui à son tour réfléchit le sous-faisceau et le fait tomber perpendiculairement sur le réflecteur supplémentaire, de sorte que le sous-faisceau est renvoyé par le même chemin.

3. Dispositif de mesure selon la revendication 2, **caractérisé en ce que** le rétroréflecteur comprend une lentille de focalisation amovible (15) se trouvant à l'arrière du séparateur de faisceaux (4) dans le sous-faisceau allant tout droit dans le séparateur de faisceaux, ainsi qu'un dispositif de déplacement (19) pour focaliser la surface réfléchissant la lumière (21A) de l'objet à mesurer (21), où le réflecteur supplémentaire (23) se trouve entre le séparateur de faisceaux et la lentille de focalisation et est perpendiculaire au faisceau lumineux (6) émis par la source de lumière.

4. Dispositif de mesure selon la revendication 2, **caractérisé en ce que** le rétroréflecteur comprend un coin de cube (51) se trouvant dans le chemin du sous-faisceau (53) renvoyé par la surface réfléchissante (21A) de l'objet de mesure (21), où le réflecteur supplémentaire (57) est perpendiculaire au sous-faisceau (58) sortant du rétroréflecteur et est renvoyé par la surface réfléchissante de l'objet de mesure, et où le système optique (2) comprend un réflecteur auxiliaire (59), se trouvant sur la face arrière du séparateur de faisceaux (4) perpendiculairement au rayon de lumière (6) sortant de la source de lumière (1) et à côté de ce rayon de lumière.

5. Dispositif de mesure selon la revendication 2, **caractérisé en ce que** le rétroréflecteur comprend une lentille de collimation (31) se trouvant dans le chemin du sous-faisceau (33) renvoyé par la surface réfléchissante (21A) de l'objet à mesurer (21), ainsi qu'un réflecteur auxiliaire (35) se trouvant dans le plan focal de la lentille de collimation, où le réflecteur supplémentaire (37) est placé parallèlement à la et à côté de la lentille de collimation, et où le système optique (2) comprend un réflecteur auxiliaire supplémentaire (41) se trouvant sur la face arrière du séparateur de faisceaux (4) perpendiculairement au rayon de lumière (6) sortant de la source de lumière (1) et à côté de ce rayon de lumière.
